Europäisches Patentamt

European Patent Office

Office européen des brevets

(11) Numéro de publication: **0 461 534 A1**

## (12) DEMANDE DE BREVET EUROPEEN

(21) Numéro de dépôt: 91109154.4

(51) Int. Cl.⁵: **F16H 3/36**

(22) Date de dépôt: 05.06.91

(30) Priorité: 14.06.90 CH 2000/90

(43) Date de publication de la demande:
18.12.91 Bulletin 91/51

(84) Etats contractants désignés:
DE ES FR GB IT NL

(71) Demandeur: Claudeville, Xavier
202, Avenue Thouars, A 3-115
F-33400 Talence(FR)

(72) Inventeur: Claudeville, Xavier
202, Avenue Thouars, A 3-115
F-33400 Talence(FR)

(74) Mandataire: Lamoureux, Bernard Jean et al
ICB, Ingénieurs Conseils en Brevets S.A.,
Passage Max Meuron 6
CH-2001 Neuchâtel(CH)

(54) Mécanisme de transmission à rapport de transmission variable.

(57)
1. Mécanisme de transmission à rapport de transmission variable de façon pseudo-continue comprenant un premier élément d'engrenage (2) mobile autour d'un premier axe (X-X') de rotation et comportant une surface tronconique (7), ce premier élément d'engrenage (2) comprenant une pluralité de premières pistes dentées (6) s'étendant selon des circonférences de ladite surface tronconique (7) et déterminant autant de rapports de transmission, et deux pluralités de secondes pistes dentées (8a, 8b) de commutation de rapport croisées disposées en spirale sur ladite surface tronconique et reliant entre elles les pistes de la pluralité de premières pistes, au moins un second élément d'engrenage (4) en prise continue avec ledit premier élément d'engrenage (2), ledit second élément engrenage (4) étant monté mobile en rotation et en translation sur un deuxième axe (Y-Y') s'étendant parallèlement à une génératrice de ladite surface tronconique, et des moyens de commande (30) destinés, en fonction du rapport de transmission souhaité, à déplacer ledit second élément d'engrenage (4) le long dudit second axe (Y-Y') pour contraindre le second élément d'engrenage à passer de l'une des premières pistes (16) à une autre des premières pistes (6) en cheminant par l'une desdites secondes pistes (8a, 8b) caractérisé en ce que lesdites premières et secondes pistes (6, 8a, 8b) sont réalisées sous la forme d'empreintes (10) pratiquées en creux dans ladite surface tronconique (7) du premier élément d'engrenage, les dents (22) dudit second élément d'engrenage (4) pénétrant au moins partiellement dans lesdites empreintes (10).

Fig. 2

L'invention concerne un mécanisme de transmission à rapport de transmission variable permettant de faire varier la vitesse d'un arbre mené par rapport à la vitesse d'un arbre menant, selon un grand nombre de rapports, sans interrompre la transmission de la force motrice.

Il est déjà connu des brevets DE-A-1 625 027, FR 387 524 et FR 482 917 des mécanismes de transmission de ce type. Ces mécanismes de transmission comprennent généralement un premier élément d'engrenage tronconique mobile en rotation autour d'un premier axe, ce premier élément d'engrenage comportant une pluralité de premières pistes dentées en saillie s'étendant à partir de la surface extérieure du tronc de cône selon des circonférences de ce dernier, ces premières pistes déterminant autant de rapports de transmission. En outre, ce premier élément d'engrenage comprend deux secondes pistes de commutation de rapports, dentées en saillie croisées et disposées en spirale sur ledit tronc de cône, pour relier la pluralité de premières pistes entre elles. Le premier élément d'engrenage est associé à au moins un second élément d'engrenage en prise continue avec lui, ledit second élément d'engrenage étant monté mobile en rotation et en translation sur un second axe s'étendant parallèlement à une génératrice dudit premier élément d'engrenage. Enfin, ces mécanismes de transmission comprennent des moyens de commande destinés, en fonction du rapport de transmission souhaité, à déplacer ledit second élément d'engrenage le long dudit second axe pour contraindre le second élément d'engrenage à passer de l'une des premières pistes à une autre des premières pistes en suivant l'une desdites secondes pistes.

Ces mécanismes présentent toutefois des inconvénients lors de leur mise en oeuvre et en particulier lorsque le second élément d'engrenage doit passer, en réponse à une commande, d'une des premières pistes à une autre des premières pistes, et cela d'autant plus que les vitesses de rotation des engrenages sont élevées.

En effet, les premières et secondes pistes dentées ménagées à la surface de élément d'engrenage tronconique comprennent des dents droites qui s'étendent chacune parallèlement aux génératrices du tronc de cône, les dents des premières pistes rejoignant les dents des secondes pistes dans une zone de transition, de sorte que le passage du second élément d'engrenage d'une première piste à une autre nécessite un glissement latéral et progressif des dents en prise à savoir des dents du second élément d'engrenage sur les dents de la seconde piste reliant la première piste en question à la première piste suivante ou précédente. Bien entendu, cette transition d'une première piste à une autre doit s'effectuer, d'une part, sans que la transmission du couple ne soit interrompu et, d'autre part à des vitesses de rotation importantes pour ne pas limiter l'application du mécanisme, soit environ 1000 à 2000 t$_r$/min. dans une application à une boîte de vitesses d'un véhicule automobile, par exemple. On s'aperçoit donc immédiatement qu'avec une telle configuration des dents sur le tronc de cône, le glissement latéral des dents en prise du second élément d'engrenage à partir d'une dent droite d'une première piste vers une dent droite d'une seconde piste ne peut s'effectuer que si le second élément d'engrenage se trouve effectivement dans la zone de transition au moment du passage.

Or, si cette possibilité de transition augmente avec la vitesse de rotation des deux éléments de l'engrenage, la vitesse de glissement latéral doit également augmenter jusqu'à devenir quasi infinie, ce qui est impossible en pratique.

Il en résulte que de tels mécanismes ne peuvent fonctionner qu'à vitesse très faible, et en utilisant un dispositif de guidage précis permettant l'asservissement du déplacement du second engrenage selon son axe de translation en fonction de la vitesse de rotation du premier élément d'engrenage faute de quoi le second élément d'engrenage risque de quitter les pistes dentées et ainsi de bloquer complètement le mécanisme.

On notera que de tels dispositifs de guidage décrits par exemple dans les brevets FR 387 524 et FR 482 917 mettent en oeuvre des mécanismes compliquées comprenant une tringlerie fonctionnant en liaison avec un organe dans lequel sont ménagées des rainures de guidage ayant la configuration des pistes dentées du premier engrenage et augmentent donc considérablement l'encombrement de l'ensemble du mécanisme et son prix de revient.

Un autre inconvénient de cet art antérieur consiste en ce qu'un tel fonctionnement en transition entraîne l'apparition de frottement et de contraintes importantes sur le flanc des dents, de sorte qu'elles subissent une usure rapide.

L'invention a donc pour but principal de remédier aux inconvénients de l'art antérieur susmentionné en fournissant un mécanisme de transmission à rapport de transmission variable ayant un faible encombrement ne nécessitant l'utilisation d'aucun dispositif de guidage annexe du second élément d'engrenage, et permettant le passage d'une première piste à une autre première piste à vitesse de rotation élevée sans interruption de la transmission du couple tout en présentant une résistance à l'usure élevée.

A cet effet, l'invention a pour objet un mécanisme de transmission à rapport de transmission variable de façon pseudo-continue comprenant un premier élément d'engrenage mobile autour d'un premier axe de rotation, ce premier engrenage comprenant une surface tronconique, une pluralité de premières pistes dentées s'étendant selon des circonférences de ladite surface tronconique et déterminant autant de rapports de transmission, et deux pluralité de secondes pistes de commutation de rapports disposées en spirales croisées sur ladite surface tronconique, reliant entre elles les pistes de la pluralité de premières pistes, un second élément d'engrenage en prise continue avec ledit premier élément d'engrenage monté mobile et en rotation en translation sur un second axe s'étendant parallèlement à une génératrice de ladite surface tronconique, et des moyens de commande destinés, en fonction du rapport de transmission souhaité, à déplacer ledit second élément d'engrenage le long dudit second axe pour contraindre le second engrenage à passer de l'une des premières pistes à une autre des premières pistes en suivant l'une desdites secondes pistes.

Conformément à l'invention, lesdites premières et secondes pistes sont réalisées sous la forme d'empreintes pratiquées en creux dans la surface tronconique du premier élément d'engrenage, les dents dudit second élément d'engrenage pénétrant au moins partiellement dans lesdites empreintes.

Grâce à ces caractéristiques, on peut réaliser un guidage des dents du second élément d'engrenage dans les empreintes, les flancs d'empreintes permettant un autocentrage de ces dents de sorte qu'en réponse aux moyens de commande, le second élément d'engrenage peut aisément suivre d'une piste circulaire à une autre via une piste en spirale sans effort important et par conséquent en diminuant le frottement entre les dents et les empreintes si bien que l'usure de l'ensemble de la transmission est diminué.

Selon un premier mode de réalisation, la surface tronconique portant les empreintes est la surface extérieure du premier élément d'engrenage.

Selon un second mode de réalisation, la surface tronconique portant les empreintes est un engrenage intérieur.

Selon une caractéristique avantageuse de l'invention, chaque empreinte est définie par un axe qui s'étend perpendiculairement à une génératrice de la surface tronconique dudit premier élément d'engrenage et concourrant avec l'axe de rotation dudit premier élément d'engrenage et présente transversalement à cet axe une section hexagonale régulièrement croissante du fond de l'empreinte vers son embouchure à la surface de ladite surface tronconique, deux côtés opposés de cette section étant orientés perpendiculairement à ladite génératrice, les empreintes des secondes pistes chevauchant les empreintes des premières pistes avec un double décalage progressif pour former des empreintes de transition d'une des premières pistes à une autre, ledit décalage étant orienté à la fois dans la direction des génératrices de ladite surface tronconique et le long des pistes, les dents du second élément d'engrenage présentant une forme complémentaire.

D'autres caractéristiques et avantages de l'invention apparaîtront à la lecture de la description qui suit de modes de réalisation de l'invention donné à titre illustratif et non limitatif en liaison avec les dessins joints parmi lesquels:

- la figure 1 est une vue schématique d'un mécanisme de transmission selon l'invention;
- la figure 2 est la projection en plan du premier engrenage selon l'invention, la projection étant faite au niveau du fond des empreintes;
- la figure 2A est une vue aggrandie d'une empreinte de transition;
- la figure 3 est une vue partielle en perspective d'une première piste du premier engrenage montrant la forme intérieure d'empreintes unitaires;
- la figure 4 est une vue partielle en perspective de la denture du second élément d'engrenage destinée à coopérer avec les empreintes du premier élément d'engrenage;
- les figures 5a à 5b sont des vues partielles en perspective selon la flèche F de la figure 1 du premier élément d'engrenage montrant la forme intérieure des empreintes dans la zone de transition d'une des premières pistes à une des secondes pistes;
- la figure 6 est une coupe d'un premier mode de réalisation d'un mécanisme de transmission selon l'invention, équipé d'un dispositif de commande du déplacement en translation du second élément d'engrenage, en fonction de sa vitesse de rotation;
- la figure 7 est une coupe du dispositif de commande de la figure 6;

- la figure 8 est une vue partielle d'un second mode de réalisation de l'invention;
- la figure 9 est une vue en perspective montrant la position relative de certains axes de rotation de la figure 8; et
- la figuure 10 est une vue en coupe d'un autre mode de réalisation du premier élément d'engrenage.

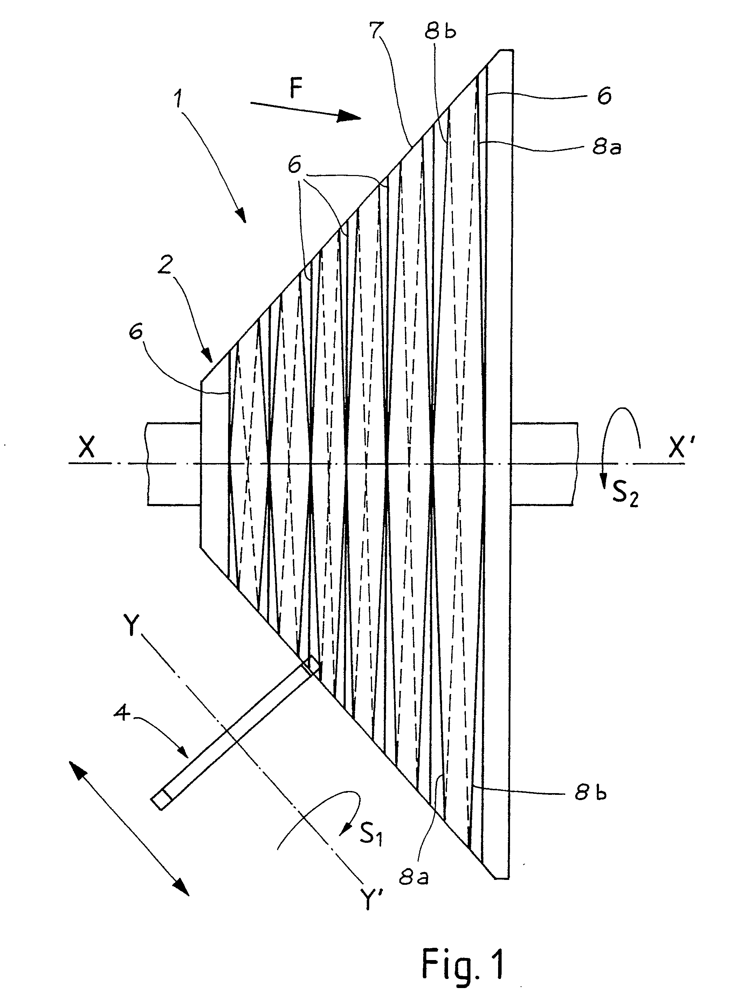

En se référant tout d'abord à la figure 1, on voit une représentation schématique d'une transmission à rapport de transmission variable selon l'invention désignée généralement par 1. Cette transmission 1 comprend essentiellement deux éléments d'engrenage 2, 4 en prise continue l'un avec l'autre. Le premier élément d'engrenage 2 présente une configuration tronconique et est mobile en rotation autour d'un premier axe de rotation X-X', tandis que le second élément d'engrenage 4 a la configuration d'une roue dentée montée en rotation et en translation sur un second axe de rotation Y-Y' qui s'étend parallèlement à une génératrice du tronc de cône. Le premier élément d'engrenage 2 comprend une pluralité de premières pistes dentées 6 s'étendant selon des circonférences à la surface extérieure du tronc de cône, ces dernières étant représentées par des traits forts perpendiculaires à l'axe X-X' à la figure 1. Ces premières pistes dentées 6 déterminent autant de rapports de transmission, à savoir 7 rapports et, à chaque rapport correspond respectivement un nombre d'empreintes pour une piste 6 égale à 11, 15, 22, 27, 33, 40 et 48, dans l'exemple de réalisation représenté à la figure. En outre ce premier élément d'engrenage 2 comprend entre deux pistes circulaires 6 deux secondes pistes 8a, 8b, de commutation de rapport, disposées en spirale sur ledit tronc de cône. Ces deux secondes pistes 8a, 8b relient les premières pistes dentées 6 entre elles et permettent au second élément d'engrenage 4 de cheminer d'un rapport supérieur à un rapport inférieur et réciproquement en se déplaçant le long de l'axe Y-Y', sans avoir à changer le sens de rotation de l'organe moteur qui peut être, selon le cas, le premier élément d'engrenage ou le second élément d'engrenage.

On notera à ce propos que dans la suite de la description le second élément d'engrenage 4 sera considéré comme étant menant et le premier élément d'engrenage 2 comme étant mené. Par ailleurs, pour un sens de rotation donné S1 du second élément d'engrenage et respectivement S2 du premier élément d'engrenage, les pistes en spirale 8a sont dites "montante" et permettent le passage du second élément d'engrenage 4 d'une piste 6 d'un diamètre inférieur à une piste 6 d'un diamètre supérieur tandis que les pistes en spirales 8b sont dites "descendante" et permettent le passage du second engrenage 4 d'une piste 6 d'un diamètre supérieur à une piste d'un diamètre inférieur.

Bien entendu, le changement de rapport de transmission est réalisé par le déplacement du second engrenage 4 le long de l'axe Y-Y' au moyen d'un dispositif de commande (non représenté sur la figure 1) qui sera décrit plus en détail ci-après.

Conformément à l'invention, des premières et secondes pistes dentées 6, 8a, 8b sont réalisées sous la forme d'empreintes 10 en creux dans la surface extérieure du premier élément d'engrenage 2 dans lesquelles les dents du second élément d'engrenage 4 pénètrent au moins partiellement.

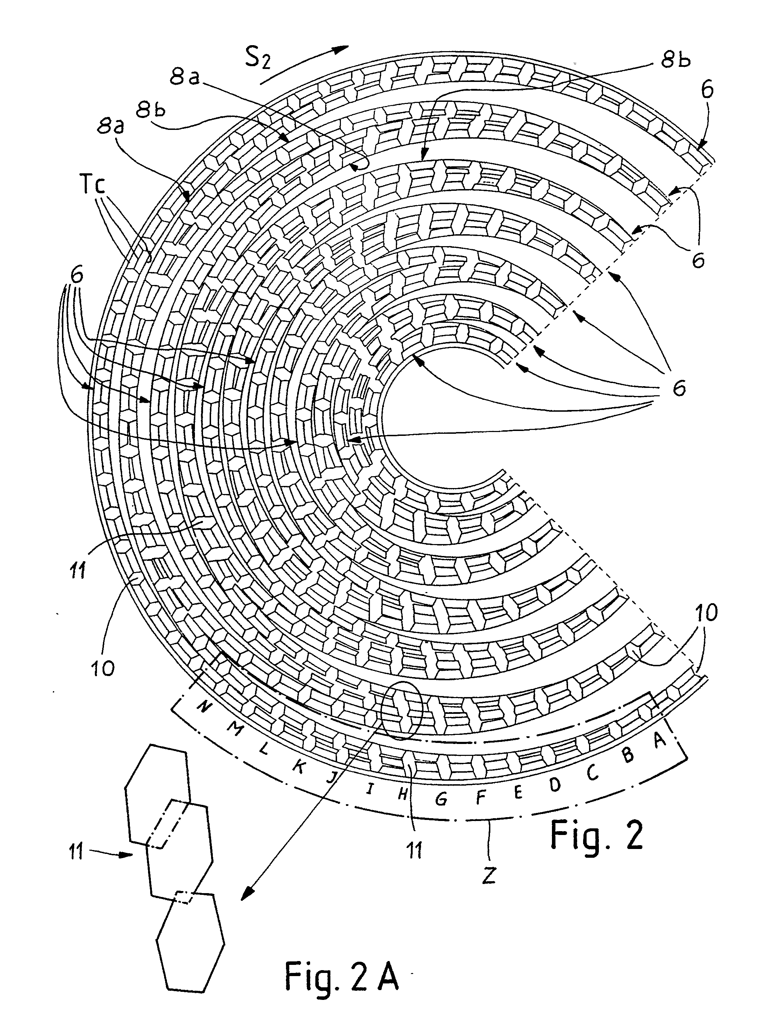

Les formes caractéristique de ces empreintes ainsi que le passage d'une des premières pistes à une autre première piste vont maintenant être décrites en détail en liaison avec les figures 2 à 5.

A la figure 2, on a représenté une projection développée sur un plan du premier élément d'engrenage 2. Cette projection montre, d'une part, la forme hexagonale des empreintes 10 au niveau du diamètre de pied de l'élément d'engrenage 2 et, d'autre part, la façon dont sont disposées les pistes dentées 6, 8a, 8b les unes par rapport aux autres.

On notera que les empreintes 10 sont reliées entre elles à la figure 2 par des traits de construction TC afin de faciliter la lecture de celle-ci. En particulier, ces traits de construction montrent plus lisiblement l'évolution des pistes dentées en spirale 8a, 8b à la surface extérieure 7 du premier élément d'engrenage 2 permettant au second élément d'engrenage de passer d'une des premières pistes circulaires 6 à une autre.

Il est également utile de préciser que dans la suite de la description, on considère la forme d'une empreinte 10 comme étant unitaire et que dans une empreinte de transition 11 (définie ci-après) on retrouve toujours la forme d'un nombre entier d'empreintes unitaires 10 comme cela est représenté à la figure 2a dans laquelle on a complété par des traits interrompus, les contours des empreintes unitaires 10 que l'on peut retrouver dans une empreinte de transition 11 quelconque.

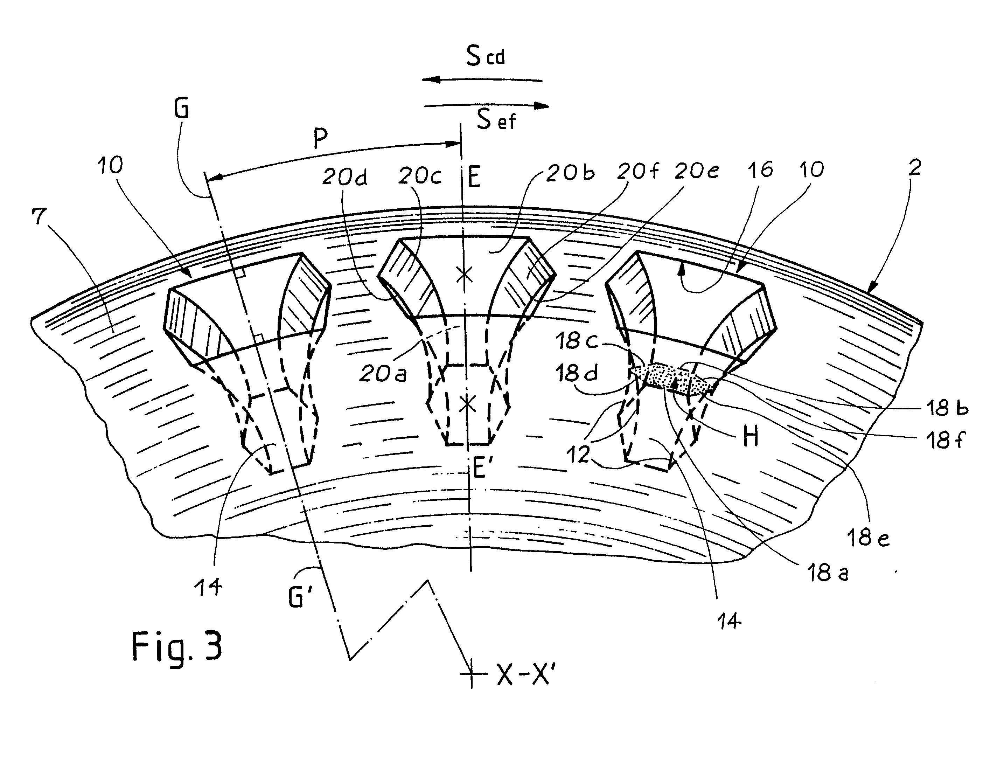

En se référant maintenant plus particulièrement à la figure 3, on voit une vue en perspective selon la flèche F de la figure 1 montrant trois empreintes unitaires 10 de la piste circulaire 6 de plus grand diamètre. Chaque empreinte de cette piste 6 est séparée d'une empreinte voisine d'une distance P correspondant au pas de l'engrenage. Ce pas P définit donc le nombre d'empreintes N pour un diamètre donné.

Bien entendu, ce pas est le même sur toutes les pistes dentées du premier élément d'engrenage 2, que ce soient les pistes circulaires 6 ou les pistes en spirale 8a, 8b. Chaque empreinte 10 est définie par un axe E-E' qui s'étend perpendiculairement à une génératrice G-G' du tronc de cône, d'une part, et qui est concourrant avec l'axe de rotation X-X' du premier élément d'engrenage 2.

Comme cela ressort clairement de la figure, chaque empreinte 10 présente transversalement à l'axe E-E' une section hexagonale H. Cette section hexagonale H est régulièrement croissante selon des portions de lignes courbes 12 qui s'étendent du fond 14 de l'empreinte 10 vers son embouchure 16 disposée à la surface extérieure 7 du tronc du cône. En d'autres termes, les empreintes 10 s'évasent du fond 14 vers l'embouchure 16.

La section hexagonale H présente deux côtés 18a, 18b parallèles et orientés perpendiculairement à l'une des génératrices G et quatre autres côtés 18c-18f parallèles deux à deux définissant deux "V" s'ouvrant vers l'intérieur de l'hexagone H. Chaque empreinte 10 présente donc six flancs 20a-20f associés respectivement aux 6 côtés 18q-18f de la section hexagonale H. Les flancs 20a, 20b sont des flancs droits qui servent au guidage des dents du second élément d'engrenage lorsqu'il se déplace sur une piste circulaire 6. En revanche, les flancs 20c, 20d et 20e, 20f sont des flancs courbes et servent respectivement à la transmission du couple moteur selon que le premier élément d'engrenage 2 tourne dans le sens $S_{e,d}$ ou $S_{e,f}$.

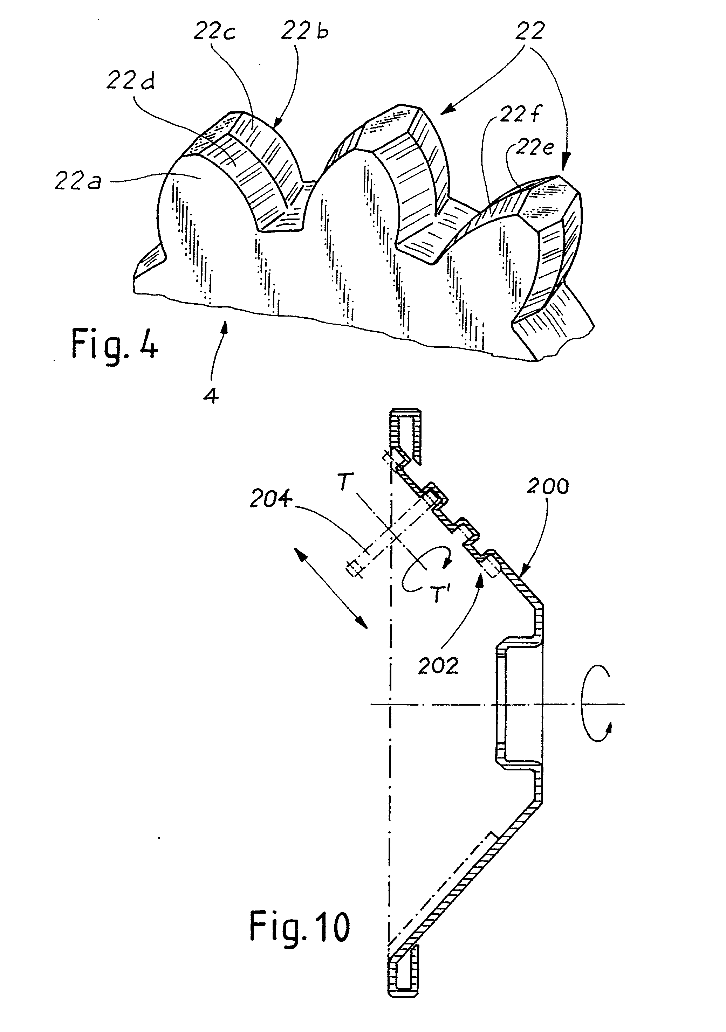

Bien entendu, le second élément d'engrenage 4 représenté partiellement à la figure 4 présente une denture de forme complémentaire à celle des empreintes 10. Les dents 22 du second élément d'engrenage comprennent donc deux flancs de guidage 22a, 22b plans et parallèles et quatre flancs d'attaque 22c, 22d et 22e, 22f destinés à coopérer respectivement avec les flancs 20c, 20d et 20e, 20f des empreintes 10 selon le sens de la rotation.

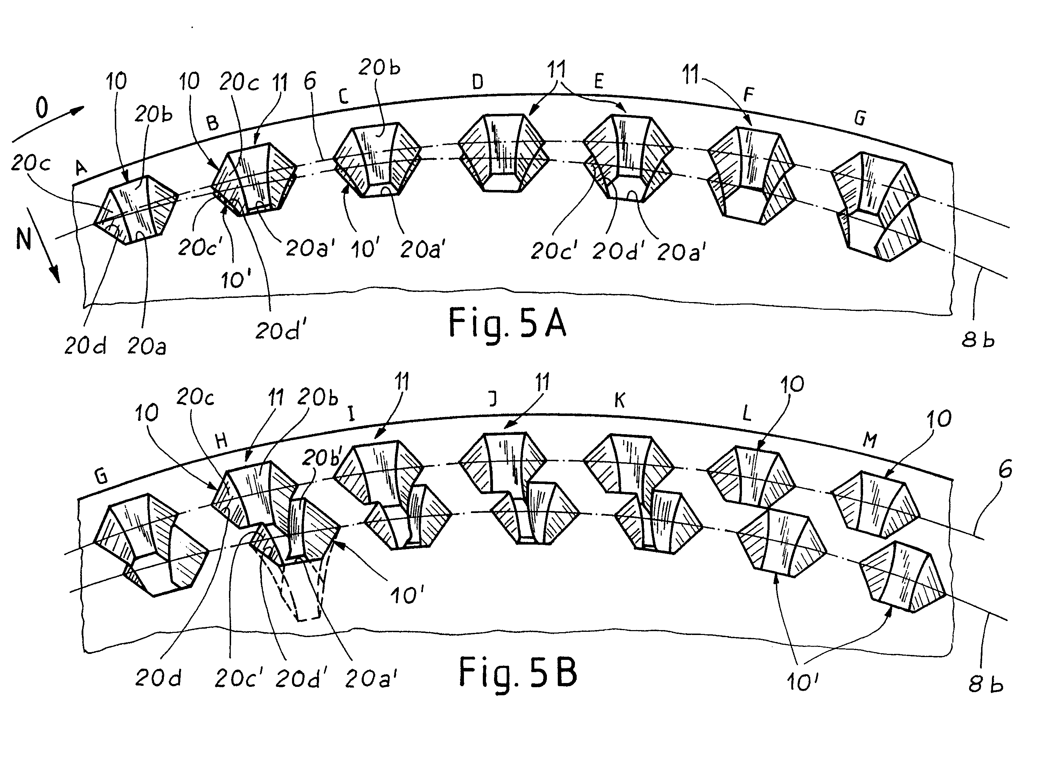

Le passage de l'élément d'engrenage 4 d'une piste circulaire 6 de rotation de l'élément d'engrenage 2 à une autre piste circulaire de ce même engrenage va maintenant être décrit en liaison avec les figures 5a et 5b.

Plus précisément, on a représenté sur ces figures 5a, 5b l'évolution de la forme des empreintes de transition 11 dans une zone de passage Z - délimitée par un cadre en traits mixtes à la figure 2. En outre, pour faciliter la description, on a porté en regard des empreintes unitaires 10 ou des empreintes de transition 11 représentées des index alphabétiques.

Dans le cas particulier les empreintes de transition 11 correspondent à un chevauchement d'empreintes unitaires 10 de la piste circulaire 6 de plus grand diamètre avec des empreintes unitaires 10 de la piste en spirale 8b descendante. Le chevauchement d'une empreinte 10 de la piste circulaire par une empreinte 10' de la piste en spirale 8b commence en B au dessin pour se terminer par une séparation totale en L des empreintes 10, 10' de chacunes des pistes circulaire 6 et en spirale 8b.

Ce chevauchement d'empreintes 10, 10' permet ainsi de former des empreintes de transition 11 de la piste circulaire 6 à une autre non représentée. Le chevauchement des empreintes 10 de la piste circulaire par celles 10 de la piste en spirale est progressif et est réalisé, lorsque l'on considère le passage de l'engrenage 4 d'une piste circulaire à une piste circulaire de diamètre inférieur, avec un double décalage orienté, d'une part, dans le sens de la flèche N et, d'autre part, le long de la piste circulaire 6 dans le sens de la flèche 0.

Le passage de la piste en spirale 8b à la piste circulaire suivante n'est pas décrite mais est réalisée de la même façon par l'intermédiaire d'empreintes de transition correspondant à un chevauchement progressif des empreintes de la piste circulaire par celle de la piste en spirale jusqu'à un chevauchement total des empreintes de la piste circulaire.

Bien entendu, lorsque l'on considère le passage d'une piste circulaire à une piste circulaire de diamètre inférieur, le double décalage mentionné plus haut est inversé.

En fonctionnement normal, c'est-à-dire lorsque aucune action n'est appliquée sur l'élément d'engrenage 4, ce dernier présente deux dents en prise dans les empreintes d'une piste circulaire 6 lesquelles sont guidées dans celle-ci. La transmission présente alors un rapport de transmission fixe.

Maintenant si l'on désire changer de rapport de transmission, on déplace l'élément d'engrenage 4 le long de son axe de rotation Y-Y' dans un sens ou dans un autre selon que l'on souhaite passer d'une piste circulaire à une autre piste circulaire d'un diamètre supérieur ou inférieur.

Dans le cas des figures 5a, 5b, on a considéré le passage d'une piste circulaire à une piste circulaire de diamètre inférieur. En déplaçant l'élément d'engrenage 4 dans le sens D1 (figure 1), ce dernier subit une poussée axiale dans le sens de la flèche N. Ainsi, des flancs d'attaque 22c, 22d des deux dents de l'élément d'engrenage 4 s'appuient dans un premier temps contre les flancs 20c et 20d des empreintes unitaires 10 (index A) pour transmettre le couple moteur tandis que les flancs 22a, 22b de l'élément d'engrenage 4 sont guidés par les flancs 20a, 20b de cette même empreinte 10.

Ensuite, la dent suivante de l'élément d'engrenage 4 rencontre une première empreinte de transition (index B) de sorte que, en liaison avec la poussée axiale, dans le sens de la flèche n, les flancs d'attaque 22c, 22d de cette dent s'appuient respectivement sur les flancs 20c', 20' de ladite empreinte de transition. Par ailleurs, la poussée axiale applique le flanc 22a de ladite dent contre le flanc 20a. Dès lors, l'élément d'engrenage 4 est guidé sur la piste en spirale 8b par les flancs 20a', 20c' et 20d'.

On remarquera que le flanc 20c' ne présente qu'une très faible surface au début de la transition (Index B-G) si bien que c'est le flanc 20d' des empreintes qui transmet la quasi totalité du couple moteur au début de la transition.

Au cours de la suite de la transition la surface du flanc 20c' augmente progressivement jusqu'à aboutir à une égalité avec la surface 20d' et par conséquent jusqu'à une égale répartition de la transmission du couple quand les empreintes de la piste en spirale 8b sont totalement séparées de celles de la piste circulaire 6 (Index L).

A ce moment, l'élément d'engrenage 4 est guidé sur la piste en spirale et chemine jusqu'à la piste circulaire suivante après que l'élément d'engrenage 2 ait effectué un tour complet et que l'engrenage 4 ait suivi la zone de transition de la piste en spirale 8b avec ladite piste circulaire suivant (non représentée).

Bien entendu, cette transition est réalisée de la même manière que celle décrite ci-dessus par la transition d'une piste circulaire avec une piste en spirale.

Bien que, dans l'exemple décrit, la transition d'une piste circulaire à une autre s'effectue en un tour complet de l'engrenage 2, on peut prévoir que cette transition s'effectue plus ou moins rapidement tout en sachant que si l'on diminue la longueur des pistes de transitions, on diminue la vitesse à laquelle la transition peut s'effectuer sans problème.

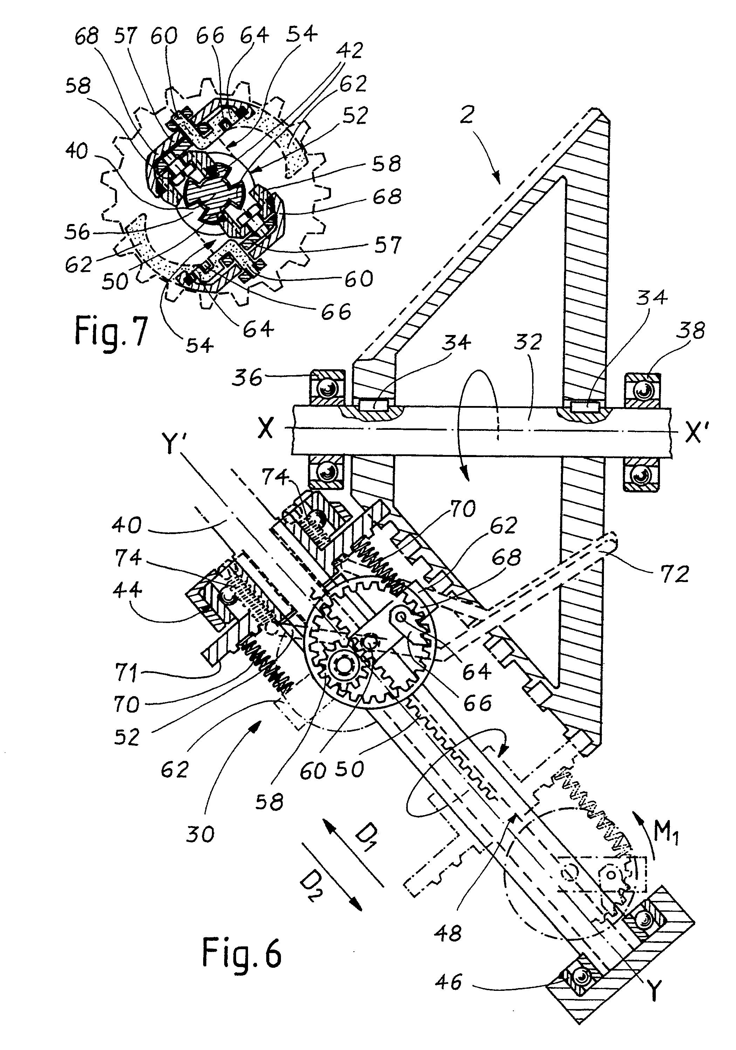

En se référant maintenant à la figure 6, on voit une transmission selon l'invention équipée d'un dispositif de commandes 30 du déplacement longitudinal le long de l'axe Y-Y' de l'engrenage 4 permettant le passage automatique d'un rapport de transmission à un autre en fonction de la vitesse de rotation de l'élément d'engrenage 4 relié à un arbre moteur 40.

Dans ce mode de réalisation, l'élément d'engrenage 2 est monté rigidement solidaire d'un arbre 32 au moyen de clavettes 34, l'arbre 32 étant à son tour monté à rotation autour de l'axe X-X' par l'intermédiaire de deux paliers 36, 38 solidaires d'un carter non représenté sur la figure .

L'élément d'engrenage 2 est directement en prise avec l'élément d'engrenage 4, qui est lié au dispositif de commande 30. L'élément d'engrenage 4 est monté coulissant sur un arbre 40 comprenant quatre cannelures 42. Bien entendu, le nombre de cannelures varie en fonction de l'importance du mécanisme de tansmission. Cet arbre 40 est monté à rotation autour de l'axe Y-Y' par l'intermédiaire de deux autres paliers 44, 46 solidaires d'un autre carter non représenté.

L'arbre cannelé 40 comprend sur une des faces internes 48 de deux cannelures 42 une crémaillère 50.

Sur chacune de ces cémaillères 50, se déplace un chariot 52 ayant la configuration d'une portion de tube cannelé intérieurement.

Le chariot 52 comprend deux languettes 54 en forme de "L" s'étendant diamétralement opposées à partir d'une face 56 de ce dernier. Chacune des branches 57 parallèles à l'axe Y-Y' de ces languettes 54 porte, d'une part, un pignon 58 directement en prise sur une crémaillère et, d'autre part, un axe 60 portant une masselotte 62 mobile en rotation autour de ce dernier. L'axe 60 a la configuration d'un "S" dont l'extrémité 64 constitue l'axe d'un cliquet 66. Ce cliquet 66 coopère avec une roue en cloche 68 dentée intérieurement et monté à rotation sur l'axe 60.

Les deux masselottes 62 ayant la configuration d'un ségment de couronne portent chacune un ressort 70 hélicoïdal prenant appui dans une glissière d'une face latérale 71 de l'élément d'engrenage 4.

Enfin, l'élément d'engrenage 4 et le chariot 52 sont associés à des contacts électriques (non représentés) formant un interrupteur coupant ou mettant en circuit l'alimentation électrique du moteur entraînant l'arbre 40.

Le fonctionnement du dispositif de commande 30 est le suivant :

A l'arrêt, le dispositif 30 est représenté en trait mixte sur la figure 6. L'élément d'engrenage 4 est en prise avec l'élément d'engrenage 2 sur la piste circulaire 6 de plus grand diamètre.

Les masselottes 62 sont légèrement inclinées par rapport à l'axe Y-Y', les ressorts sont détendus et l'interrupteur formé par les contacts électriques associés au chariot 52 et à l'élément d'engrenage 4 est fermé.

Au démarrage, la vitesse de rotation de l'arbre moteur 40 augmente et déplace angulairement les masselottes 62 dans le sens de la flèche $M_1$ au dessin, sous l'effet de la face centrifuge. Quand l'arbre 40 atteint une vitesse de rotation maximale déterminée en fonction des variables du moteur, les masselottes 62 atteignent une position sensiblement perpendiculaire à l'axe Y-Y' de sorte qu'elles compriment le ressorts 70. La compression de ces ressorts engendre une poussée selon l'axe Y-Y' de l'élément d'engrenage 4 qui peut alors cheminer de la piste circulaire à une piste en spirale comme cela a été mentionné plus haut en liaison avec les figures 1 à 5. L'élément d'engrenage se déplace alors dans le sens D1 tandis que le chariot 52 reste immobile, bloqué par les cliquets 66.

Ce brusque déplacement de l'élément d'engrenage par rapport au chariot 52 ouvre l'interrupteur formé par les contacts électriques associés à ces derniers si bien que l'alimentation du moteur est interrompue et que le régime moteur diminue. Par voie de conséquence, les masselottes 62 reviennent à leur position initiales en actionnant alors les roues en cloche 68 et donc les pignons 58 si bien que le chariot 52 se déplace le long des crémaillères 50 dans le sens D1 et ferme à nouveau l'interrupteur "chariot 52 - l'élément d'engrenage 4".

Il s'en suit une nouvelle augmentation de la vitesse de rotation de l'arbre moteur 40 et un nouveau changement de rapport tel que décrit précédemment.

En ce qui concerne le rétrogradage, il s'opère manuellement à l'aide d'une fourche 72 dont chaque branche est reliée à l'élément d'engrenage 4 par l'intermédiaire d'un ressort 74. Pour réaliser le rétrogradage le régime moteur doit être suffisamment bas pour que les masselottes libèrent les cliquets et autorisent un déplacement de l'ensemble élément d'engrenage 4 - chariot 52 dans le sens de la flèche D2.

On notera que l'on peut obtenir ainsi un rétrogradage actif, c'est-à-dire un frein moteur continu.

Pour les fortes et moyennes puissance, la transmission décrite jusqu'ici, n'est guère envisageable à cause de la faible longueur des dents 22 qui obligerait à surdimensionner l'ensemble engrenage 2 - 4 de façon excessive pour que les dents et les empreintes résistent aux contraintes de pression engendrées par cette transmission.

Pour pallier cette limitation, il est prévu d'utiliser deux éléments d'engrenages 4 reliés à une source motrice commune, d'une part et engrenant simultanément à des endroits différents de l'élément d'engrenage 2, d'autre part.

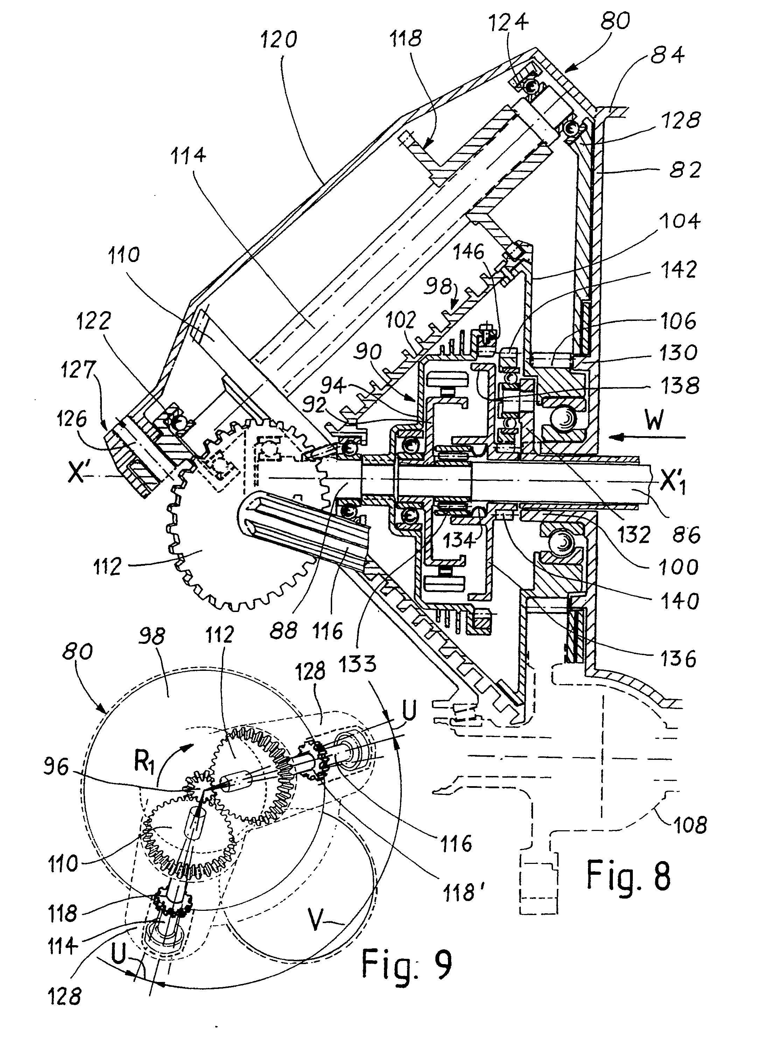

Ce mode de réalisation est représenté aux figures 8 et 9 dans le cadre d'une application de la transmission selon l'invention à une transmission pour un véhicule automobile.

Le mécanisme de transmission représenté aux figures 8 et 9 comprend un carter de boîte 80 ayant une forme générale tronconique accolé à une paroi 8, du carter moteur 82 dans laquelle est monté à rotation un arbre moteur 86 tournant autour d'un axe X1-X1' s'étendant perpendiculairement à la paroi 82. Cette arbre moteur 8 est relié à un tronçon d'arbre 88 par l'intermédiaire d'un embrayage centrifuge 90 classique comportant un porte masselotte 92 solidaire de l'arbre moteur 86 coopérant avec une cloche principale 94 solidaire du tronçon d'arbre 88.

Ce tronçon d'arbre 88 se termine par un pignon conique 96. Un élément d'engrenage tronconique 98, du type de clui désigné par la référence numérique 2 décrit précédemment, est monté libre en rotation, d'une part, sur une partie épaulée du tronçon d'arbre 88 et, d'autre part, sur une lévre 100 du carter entourant l'arbre 86 avec un certain jeu au moyen de roulements classiques.

L'engrenage tronconique 98 est formé de deux parties, à savoir une partie tronconique évidée 102 s'étendant autour de l'embrayage 90 et un flasque 104 formant couvercle. Le flasque 104 et muni d'un épaulement denté 106 en prise avec un différentiel 108.

Le pignon conique 96 est en prise avec deux roues dentées 110, 112 solidaires respectivement de deux arbres 114, 116 sur lesquels coulisse respectivement un élément d'engrenage 118 dont seul un est visible au dessin.

A ce propos, on notera que pour faciliter la lecture de la figure, le dispositif de commande en translation de l'élément d'engrenage a été omis. Bien entendu, ce dispositif peut être de type manuel, centrifuge ou électromagnétique.

La structure et la position des arbres 114, 116 et de l'engrenage 118 par rapport à celles de l'arbre 40 et de l'engrenage 4 sont similaires à ce qui a été décrit en liaison avec la figure 6.

Par ailleurs, le montage des deux arbres 114, 116 dans le carter de boîte 80 étant similaire, nous ne décrirons dans ce qui suit que l'agencement général de l'arbre 114.

L'arbre 114 est monté dans une partie 120 du carter de boîte 80 ayant la forme d'une croissance semi-cylindrique. L'arbre 114 est monté entre deux paliers 122, 124 reliés respectivement à un axe 126 de pivotement s'étendant perpendiculairement à sont axe de rotation à une extrémité 127 de l'excroissance semi-cylindre et à un bras porte palier 128 s'étendant le long de la paroi 82 du carter moteur.

Ce bras 128 a son pied en forme d'anneau, lequel est monté à rotation sur une lèvre circulaire 130 s'étendant à partir de la paroi 82 du carter moteur. Ce bras a un débattement angulaire U (figure 8) autour de la lèvre cirulaire 130 de quelques degrés, limité par des butées (non représenté).

Quand le pignon conique 96 tourne dans le sens de la flèche R1 (figure 9), les deux bras port palier 128 s'appuient contre les butées limitant leur rotation vers la gauche au dessin par suite de la force de réaction inverse de l'élément d'engrenage 98.

Quand un premier élément d'engrenage 118 (associé à l'arbre 114) chemine sur une piste en spirale pour passer d'une piste circulaire à une autre piste circulaire de plus petit diamètre, le second élément d'engrenage 118 (associé à l'arbre 116) cheminant encore, soit sur la piste circulaire, soit sur une partie de la piste en spirale dont le diamètre est supérieur au diamètre de la partie de piste en spirale sur laquelle chemine le premier élément d'engrenage 118, ce second élément d'engrenage 118 cesse d'être entraînant pour devenir entraîné.

L'arbre 114 portant le second élément d'engrenage se déplace alors de quelques degrés dans le sens de la flèche R1 rétrécissant d'autant l'angle V entre les deux arbres 114, 116.

Dans le cas où un premier élément d'engrenage 118 chemine sur une piste en spirale pour passer d'une piste circulaire à une autre piste circulaire de plus grand diamètre, il cesse d'être entraînant et l'arbre qui le porte se déplace dans le sens de la flèche R1 de quelques degrés augmentant d'autant l'angle V entre les deux arbres.

Selon le même principe, on peut envisager un troisième, voire même un quatrième arbre avec d'autres rapports de diamètres pour d'autres installation encore plus puissantes.

S'agissant d'une transmission pour une automobile, il est nécessaire de prévoir un mécanisme d'enclenchement d'une marche-arrière. Or, utiliser des mécanismes classiques pour assurer la marche-arrière de cette transmission à engrenage toujours en prise reviendrait à perdre les principaux avantages à la base de sa conception qui sont, d'une part, la suppression d'embrayage manuel et de l'ensemble de la tringlerie de boîte et de pédale d'embrayage, et d'autre part, d'éviter de faire coulisser la plupart des engrenages de commande avec des syncroniseurs.

Pour réaliser un mécanisme de marche-arrière ne présentant pas ces inconvénients, on prévoit un porte pignon satellite 132, monté pour coulisser de façon axiale sur l'arbre moteur 86. Ce poste satellite 132 est destiné à pousser contre un ressort 134 une cloche secondaire d'embrayage 136 sur un roulement à aiguille 133. Cette cloche secondaire 136 comprend une collerette 138 qui peut s'intercaler entre les masselottes 92 et la cloche principale 94 pour réaliser une marche-arrière.

En outre, la cloche secondaire 136 comprend à partir de la face opposée à celle portant la collerette, un épaulement formant engrenage 140 en prise permanente avec le satellite 142 du poste satellite.

Lorsque l'on déplace axialement la porte satellite 132 dans le sens de la flèche W, celui-ci déplace la cloche secondaire dans le même sens de sorte que le satellite 142 fixé à l'extrémité de la cloche principale de l'embrayage 90 et réalise ainsi une marche-arrière.

En se référant maintenant à la figure 10, on voit un élément d'engrenage tronconique 200 du type de celui décrit précédemment. Toutefois, cet élément d'engrenage 200 est réalisé en tôle emboutie et comporte ses pistes dentées circulaires et en spirale sur sa paroi intérieure 202. Un second élément d'engrenage 204 se déplace alors à l'intérieur du premier élément d'engrenage tronconique le long d'un axe de rotation T-T'.

## Revendications

1. Mécanisme de transmission à rapport de transmission variable de façon pseudo-continue comprenant un premier élément d'engrenage (2) mobile autour d'un premier axe (X-X') de rotation et comportant une surface tronconique (7), ce premier élément d'engrenage (2) comprenant une pluralité de premières pistes dentées (6) s'étendant selon des circonférences de ladite surface tronconique (7) et déterminant autant de rapports de transmission, et deux pluralités de secondes pistes dentées (8a, 8b) de commutation de rapport croisées disposées en spirale sur ladite surface tronconique et reliant entre elles les pistes de la pluralité de premières pistes, au moins un second élément d'engrenage (4) en prise continue avec ledit premier élément d'engrenage (2), ledit second élément engrenage (4) étant monté mobile en rotation et en translation sur un deuxième axe (Y-Y') s'étendant parallèlement à une génératrice de ladite surface tronconique, et des moyens de commande (30) destinés, en fonction du rapport de transmission souhaité, à déplacer ledit second élément d'engrenage (4) le long dudit second axe (Y-Y') pour contraindre le second élément d'engrenage à passer de l'une des premières pistes (16) à une autre des premières pistes (6) en cheminant par l'une desdites secondes pistes (8a, 8b) caractérisé en ce que lesdites premières et secondes pistes (6, 8a, 8b) sont réalisées sous la forme d'empreintes (10) pratiquées en creux dans ladite surface tronconique (7) du premier élément d'engrenage, les dents (22) dudit second élément d'engrenage (4) pénétrant au moins partiellement dans lesdites empreintes (10).

2. Mécanisme de transmission selon la revendication 1, caractérisé en ce que ladite surface tronconique (7) est la surface extérieure du premier élément d'engrenage.

3. Mécanisme de transmission selon la revendication 1, caractérisé en ce que la surface tronconique (7) est un engrenage intérieur.

4. Mécanisme de transmission selon l'une des revendications 1 à 3, caractérisé en ce que chaque empreinte (10) est définie par un axe (E-E') qui s'étend perpendiculairement à une génératrice (G) dudit premier élément d'engrenage et présente transversalement à cet axe une section hexagonale (H) régulièrement croissante du fond (14) de l'empreinte (10) vers son embouchure (16) à la surface de ladite surface tronconique (7), deux côtés opposés (18a, 18b) de cette section étant (h) orientés perpendiculairement à ladite génératrice (G), en ce que les empreintes (10') des secondes pistes (8a, 8b) chevauchent les empreintes (10) des premières pistes (6) avec un double décalage progressif pour former des empreintes de transition (11) d'une des premières pistes (6) à une autre, ledit décalage étant orienté à la fois dans la direction des génératrices de ladite surface tronconique (7) et le long des pistes (6) et en ce que les dents (22) du second engrenage présentent une forme complémentaire.

5. Mécanisme de transmission selon l'une des revendications précédentes caractérisé en ce que les secondes pistes (8a, 8b) permettent de passer d'un rapport de transmission à un autre rapport de transmission immédiatement suivant un précédent s'étendant sur une circonférence complète du tronc de cône.

6. Mécanisme de transmission selon l'une des revendications précédentes caractérisé en ce que le premier élément d'engrenage comprend sept pistes dentées comprenant respectivement 11, 15, 22, 27, 33, 40 et 48 empreintes.

7. Mécanisme de transmission selon l'une quelconque des revendications précédentes caractérisé en ce que les moyens de commande (30) comprennent des moyens sensibles à la vitesse de rotation dudit second élément d'engrenage.

8. Mécanisme de transmission selon la revendication 7 caractérisé en ce que lesdits moyens sensibles à la vitesse de rotation dudit second élément d'engrenage comprennent des masselottes (62) mues par la force centrifuge.

9. Mécanisme de transmission selon la revendication 6 caractérisé en ce que le second élément d'engrenage est relié à un arbre menant et en ce que le mécanisme comporte en outre un troisième élément d'engrenage relié à un second arbre menant, ce dernier ayant la même source motrice que ledit arbre menant et en ce que les second et troisième éléments d'engrenages engrènent simultanément à des endroits différents du cône.

10. Mécanisme de transmission selon l'une quelconque des revendications précédentes à l'exclusion de la revendication 2 caractérisé en ce que le premier engrenage est réalisé en tôle emboutie.

Fig. 1

Fig. 2

Fig. 2 A

Fig. 3

Fig. 4

Fig. 10

Fig. 5A

Fig. 5B

EP 0 461 534 A1

Fig.7

Fig.6

Fig. 8

Fig. 9

Office européen
des brevets

**RAPPORT DE RECHERCHE
EUROPEENNE**

Numéro de la demande

**EP 91 10 9154**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-3 530 91   (FAYOL)(01-09-1905)<br>* Le document en entier *<br>– – – | 1 | F 16 H 3/36 |
| A,D | DE-A-1 625 027   (Dr. HERBERT)(11-06-1970)<br>* Le document en entier (cité dans la demande) *<br>– – – | 1 | |
| A | US-A-2 970 494   (F.J. LYNCH)(07-02-1961)<br>* Le document en entier *<br>– – – | 1 | |
| A | FR-E-1 055 1   (CIANFERONI)(30-07-1909)<br>* Page 2, lignes 71-79; figures 1,4 *<br>– – – | 1,7,8 | |
| A | FR-A-6 037 45   (LEE)(22-04-1926)<br>* Le document en entier *<br>– – – | 1,9 | |
| X,P | FR-A-2 640 342   (CLAUDEVILLE)(15-06-1990)<br>* Le document en entier *<br>– – – – – | 1,2,5,6 | |

|  | DOMAINES TECHNIQUES RECHERCHES (Int. Cl.5) |
|---|---|
|  | F 16 H |

Le présent rapport de recherche a été établi pour toutes les revendications

| Lieu de la recherche | Date d'achèvement de la recherche | Examinateur |
|---|---|---|
| La Haye | 17 septembre 91 | MENDE H. |